# EUROPEAN PATENT SPECIFICATION

(11) **EP 3 150 474 B1**
(45) Date of publication and mention of the grant of the patent: **05.09.2018**
(21) Application number: 16188823.5
(22) Date of filing: 14.09.2016
(51) Int. Cl.: B62K 11/02, B62K 19/30

(54) **BATTERY COMPARTMENT FOR SADDLE-TYPE VEHICLE**
BATTERIEFACH FÜR SATTELFAHRZEUG
COMPARTIMENT POUR PILE POUR VÉHICULE DE TYPE À ENFOURCHER

(30) Priority: 29.09.2015 JP 2015190877
(43) Date of publication of application: 05.04.2017
(73) Proprietor: Honda Motor Co., Ltd., Minato-ku Tokyo 107-8556 (JP)
(72) Inventor: OHSHITA, Akira, Wako-shi, Saitama 351-0193 (JP); NAKAGAWA, Hideaki, Wako-shi, Saitama 351-0193 (JP)
(74) Representative: Piésold, Alexander James

(56) References cited:
- JP-A- H0 443 177
- JP-A- H05 105 149
- US-A- 5 477 936

## Description

The present invention relates to a saddle-type vehicle provided with a storage box between lower frames passing under a floor step.

Disclosed configurations of saddle-type vehicles such as motorcycles include a configuration provided with a storage box used for storing a battery, for example, between a pair of lower frames passing under a floor step on which a passenger places his or her feet (for example, see JP-A-2003-341573).

However, in the configuration of the related art, the lower frames put a limitation on a storable amount and hinders arrangement of a larger-sized battery and other components.

Accordingly, it is an object of at least the preferred embodiments of the present invention to provide a saddle-type vehicle which achieves an efficient increase in storable amount even in a limited space in a vehicle.

A saddle-type vehicle in accordance with the pre-characterising part of claim 1 is known from JP H04 43177A, which represents the closest prior art, or US 5477936A.

The present invention provides a saddle-type vehicle including a floor step that is arranged between a steering handle and a passenger seat and allows a passenger to place his or her feet; a pair of lower frames that constitute part of a vehicle body frame and pass under the floor step; and a storage box arranged between the lower frames, wherein the storage box and an object to be stored in the storage box overlap with the lower frames in top view of the vehicle, characterised in that the vehicle further comprises an opening provided on a side wall of the storage box; and a lid portion that is detachable and covers the opening; and in that the opening is provided between the lower frames in the top view of the vehicle, and the lid portion has a shape that swells out from the opening and overlaps with the lower frame in the top view of the vehicle.

In the above-described configuration, part of the storage box may swell toward an area under the lower frame and overlap with the lower frame in the top view of the vehicle, and the storage box may store an object to be stored that extends across the part of the storage box and a remaining part thereof as the object to be stored.

In the above-described configuration, the lid portion may close the opening from inside the storage box.

In the above-described configuration, the storage box may include an inclined portion that inclines obliquely downward toward the lower frame that overlaps with the lid portion in the top view of the vehicle, and the inclined portion may be a base that guides the object to be stored placed on the inclined portion to a position where the lid portion is held.

In the above-described configuration, a parallelepiped battery may be placed on the inclined portion as the object to be stored, and the inclined portion may obliquely support the battery in such a posture that terminals of the battery are at relatively higher positions.

In the above-described configuration, the storage box may support the battery at a position biased toward one of the lower frames, which overlaps with the lid portion in the top view of the vehicle, and with respect to the battery, electric components connected to the battery may be stored on an opposite side to the one of the lower frames.

In the above-described configuration, the floor step and the storage box except for the lid portion may be integrally molded, the storage box may have a box shape depressed downward from the floor step and overlap with an upper opening that opens the storage box upward when the lid portion is demounted in the top view of the vehicle, and the lid portion may overlap with the floor step in the top view of the vehicle.

The present invention includes the pair of lower frames arranged between the steering handle and the passenger seat and passing under the floor step for allowing the passenger to place his or her feet, and the storage box that is arranged between the lower frames, wherein the storage box and an object to be stored in the storage box overlap with the lower frame in top view of the vehicle. Therefore, a space overlapping with the lower frame in top view of the vehicle can be effectively used as a storage space, and the storable amount may be effectively increased even in a limited space in the vehicle.

Part of the storage box may swell toward an area under the lower frames and overlap with the lower frames in top view of the vehicle, and the storage box may store an object to be stored that extends across the part of the storage box and the remaining part as the object to be stored. Therefore, a large-sized object to be stored may be stored.

The opening provided on the side wall of the storage box and the lid portion that is detachable and covers the opening is provided, and the opening is provided between the lower frames in top view of the vehicle, and the lid portion has a shape that swells out from the opening and overlaps with the lower frame in top view of the vehicle. Therefore, the storage box that overlaps with the lower frame in top view of the vehicle may be manufactured with low costs without using a slide die.

The lid portion may close the opening from inside the storage box, so that an operation of mounting and demounting the lid portion may be facilitated.

The storage box may include the inclined portion that inclines obliquely downward toward the lower frame that overlaps with the lid portion in top view of the vehicle, and the inclined portion may have the base that guides the object to be stored placed on the inclined portion to a position of holding the lid portion. Therefore, the lid portion may be held to a position to close the opening by using the object to be stored.

The parallelepiped battery may be placed on the inclined portion as the object to be stored, and the inclined portion may obliquely support the battery in such a posture that the terminals of the battery are at relatively higher positions. Therefore, the parallelepiped large-sized battery may be accommodated and the terminals of the battery may be supported at higher position away from the ground.

The storage box may support the battery at the position biased toward the one of the lower frames, which overlaps with the lid portion in top view of the vehicle, and with respect to the battery, the electric components connected to the battery may be stored on the opposite to the one of the lower frames. Therefore, the large-sized battery and the electric components connected to the battery may be efficiently stored.

The floor step and the storage box except for the lid portion may be integrally molded, the storage box may have a box shape depressed downward from the floor step and overlaps with the upper opening that opens the storage box upward when the lid portion is demounted in top view of the vehicle, and the lid portion may overlap with the floor step in top view of the vehicle. Therefore, the floor step and the storage box may be integrally molded without using the slide die.

Embodiments of the present invention will be described below by way of example and with reference to the drawings.

Fig. 1 is a left side view of a motorcycle according to an embodiment of the present invention.
Fig. 2 is a perspective view of a vehicle body frame.
Fig. 3 is a top view of a second storage box illustrated with peripheral configurations.
Fig. 4 is a cross-sectional view taken along the line IV-IV in Fig. 3.
Fig. 5 is a cross-sectional view taken along the line V-V in Fig. 3.
Fig. 6 is a cross-sectional view taken along the line VI-VI in Fig. 3.
Fig. 7 is a cross-sectional view taken along the line VII-VII in Fig. 3.
Fig. 8 is a top view of a second storage box illustrated with peripheral configurations with electric components removed.
Fig. 9 is a perspective view of the second lid portion.

In the description, terms indicating directions such as front, rear, left, right, up, and down are the same directions with respect to a vehicle body unless otherwise specifically noted. Reference signs FR shown in the respective drawings indicate the front of the vehicle body, reference signs UP indicate an upper direction of the vehicle body, and reference signs LH indicate the left of the vehicle body.

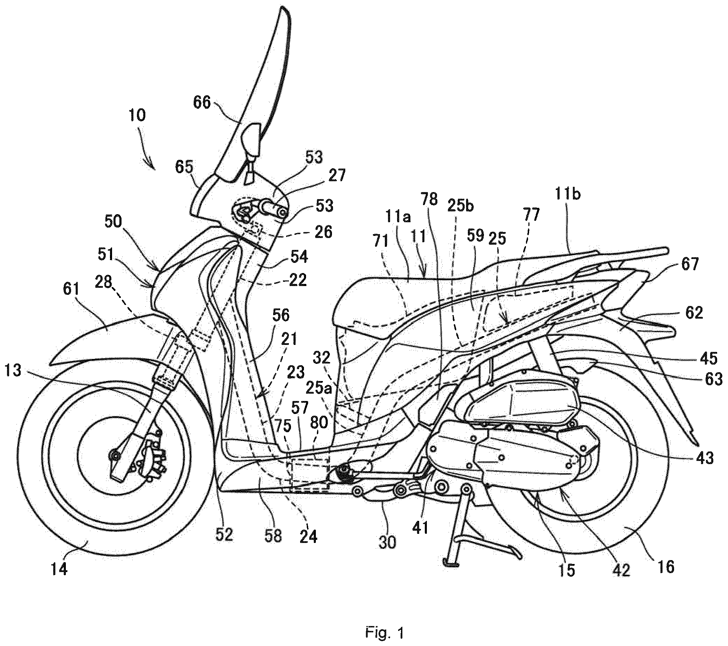

Fig. 1 is a left side view of a motorcycle 10 according to the embodiment of the present invention.

The motorcycle 10 is a scooter-type, saddle-type vehicle including a low floor step 12 that allows a driver (passenger) seated on a passenger seat 11 to place his or her feet, and includes a vehicle body frame 21, a front wheel 14 supported by the vehicle body frame 21 via a front fork 13, a unit-swing-type power unit 15 supported by the vehicle body frame 21, and a rear wheel 16 pivotally supported by the power unit 15.

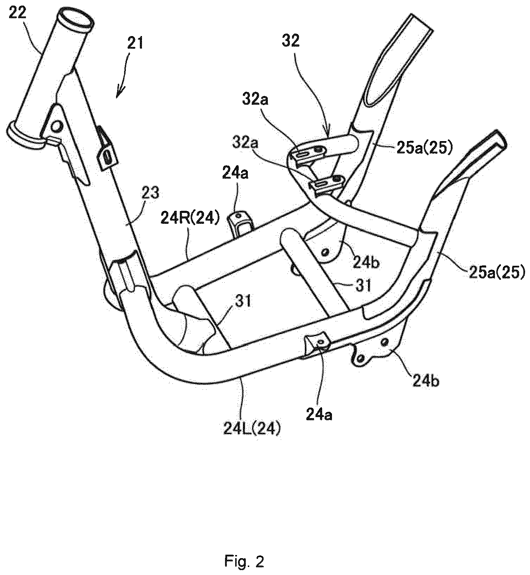

Fig. 2 is a perspective view of the vehicle body frame 21. Fig. 2 illustrates a front portion of the vehicle body frame 21, and a rear portion (which corresponds to rear frame rear portions 25b, 25b) is omitted.

As illustrated in Fig. 2, the vehicle body frame 21 includes a head pipe 22, a single down frame 23 extending rearward and downward from the head pipe 22, a pair of left and right lower frames 24, 24 extending leftward and rightward from a lower portion of the down frame 23 and then extending linearly rearward, and a pair of left and right rear frames 25, 25 (Fig. 1) extending from rear ends of the lower frames 24, 24 integrally rearward and upward.

The head pipe 22 rotatably supports a steering stem 26. A steering handle 27 is mounted on an upper portion of the steering stem 26, and the front fork 13 that pivotally supports the front wheel 14 via a bottom bridge 28 is mounted on a lower portion of the steering stem 26. In this configuration, the front wheel 14 is steered to the left and the right by steering the steering handle 27 leftward and rightward.

As illustrated in Fig. 1, the lower frames 24, 24 extend rearward substantially horizontally from the lower portion of the down frame 23 in side view of the vehicle body, and constitute the lowest frame portion of the vehicle body frame 21. These lower frames 24, 24 support the floor step 12, and support the power unit 15 at rear end portions of the lower frames 24, 24 via link mechanisms 30 so as to be swingable upward and downward. The floor step 12, being supported by the lower frames 24, 24, may be supported at a low position in the rear of the steering handle 27 and in the front of the seat 11 with a sufficient supporting rigidity.

As illustrated in Fig. 2, the lower frames 24, 24 are provided with mounting seats 24a, 24a that protrude outward from the lower frames 24, 24, respectively, in a vehicle width direction. The floor step 12 is placed on the mounting seats 24a, 24a from above and the floor step 12 and the mounting seats 24a, 24a are fixedly fastened by using fastening members, which are not illustrated.

As illustrated in Fig. 2, brackets 24b, 24b for supporting the power unit are provided at the rear end portions of the lower frames 24, 24, and the power unit 15 is supported by these brackets 24b, 24b via the link mechanisms 30 (Fig. 1).

The lower frames 24, 24 are provided with a pair of front and rear cross frames 31, 31 extending linearly in the vehicle width direction at a distance in a fore-and-aft direction. These cross frames 31, 31 improves frame rigidity around the lower frames 24, 24.

A curved-shaped cross frame 32 protruding toward the front as illustrated in Fig. 2 is mounted on front portions 25a, 25a of the rear frames 25, 25 (hereinafter, referred to as "rear frame front portions 25a, 25a") extending obliquely upward from rear ends of the lower frames 24, 24. The cross frame 32 improves frame rigidity around the rear frame front portions 25a, 25a. The cross frame 32 is provided with mounting seats 32a, 32a on which a first storage box 71, which will be described later, is placed and fastened by using fastening members, which are not illustrated.

As illustrated in Fig. 1, the power unit 15 includes an engine 41 and a continuously variable transmission 42 provided integrally with a rear portion of the engine 41. The continuously variable transmission 42 is positioned on the left side of the rear wheel 16, and an air cleaner 43 which constitutes an intake system is arranged above the continuously variable transmission 42. An exhaust muffler is connected to the engine 41 via an exhaust pipe, which is not illustrated. The exhaust muffler is arranged on a side opposite to the continuously variable transmission 42 with the rear wheel 16 interposed therebetween, that is, on the right side of the rear wheel 16. A rear cushion unit 45 is arranged between the power unit 15 and the rear half portion 25b of one of the rear frames 25 (referred to as "rear frame rear portion 25b").

The motorcycle 10 includes a vehicle body cover 50 that covers the vehicle body frame 21. The vehicle body cover 50 includes a front cover 51 that covers the front of the head pipe 22, a pair of left and right front lower covers 52, 52 provided continuously from a lower end of the front cover 51 (only the front lower cover 52 on the near side is illustrated), and a handle cover 53 that covers a central portion of the steering handle 27.

The vehicle body cover 50 includes a front inner cover 54 that covers the rear of the head pipe 22 and the down frame 23, and a leg shield 56 that protrudes rightward and leftward from the front inner cover 54 and covers the front of leg portions of the driver (passenger).

The vehicle body cover 50 also includes under covers 58 that cover the lower frames 24, 24 from below and side covers 59 that cover outer sides of the rear frames 25, 25 in the vehicle width direction, as well as a front fender 61 that covers the upper part of the front wheel 14, a rear fender 62 that covers a rear upper part of the rear wheel 16, and an inner rear fender 63 that covers a front upper part of the rear wheel 16.

A headlight 65 is arranged at a center of a front surface of the handle cover 53, and a wind screen 66 extending rearward and upward in side view of the vehicle body is arranged on an upper portion of the front surface of the handle cover 53. A tail lamp 67 is arranged at a rear end of an upper portion of the rear fender 62.

The motorcycle 10 includes the first storage box 71 that forms a storage section under the seat 11 and a second storage box 75 that forms a storage section under the floor step 12.

The first storage box 71 is arranged in a space under the seat 11, above the power unit 15, and between the pair of left and right rear frame front portions 25a, 25a. The first storage box 71 is supported by the cross frame 32 and the like which cross-links the rear frame front portions 25a, 25a, and is used as a storage section for storing a helmet that the passenger wears or a given object to be stored such as a luggage of the passenger.

The seat 11 is rotatably mounted on a front end portion of the first storage box 71 so as to be openable and closable the first storage box 71. The seat 11 includes a front seat 11a for the passenger and a rear seat 11b for a fellow passenger integrally arranged in the rear of the front seat 11a. The front seat 11a extends over the first storage box 71, and the rear seat 11b extends over the rear portion of the first storage box 71 and also over a fuel tank 77 supported by the rear frame rear portions 25b, 25b. Accordingly, opening the seat 11 exposes the fuel tank 77 to the outside together with the first storage box 71.

A pair of left and right fellow passenger's steps 78, 78 on which the fellow passenger seated on the rear seat 11b places his or her feet are mounted so as to be storable in the rear frame front portions 25a, 25a via a stay, which is not illustrated. Accordingly, the fellow passenger's steps 78, 78 are arranged at lower rear positions of the first storage box 71, which correspond to the front of the air cleaner 43 in side view of the vehicle body.

The second storage box 75 is arranged under the floor step 12, between the pair of left and right lower frames 24, 24, and between the pair of front and rear cross frames 31, 31, and is a storage section for storing vehicle components including electric components such as a battery 80 as an object to be stored. The sides of, and below the second storage box 75 are covered with the under covers 58.

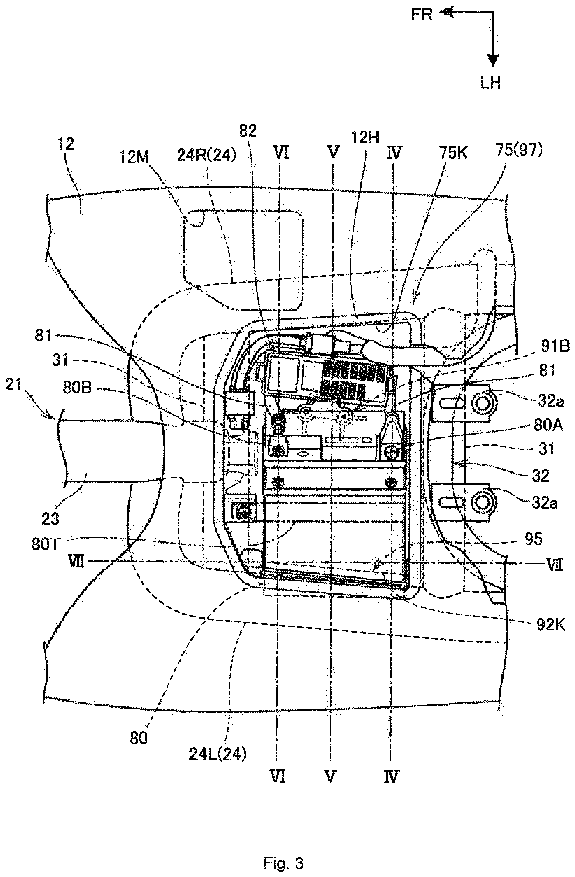

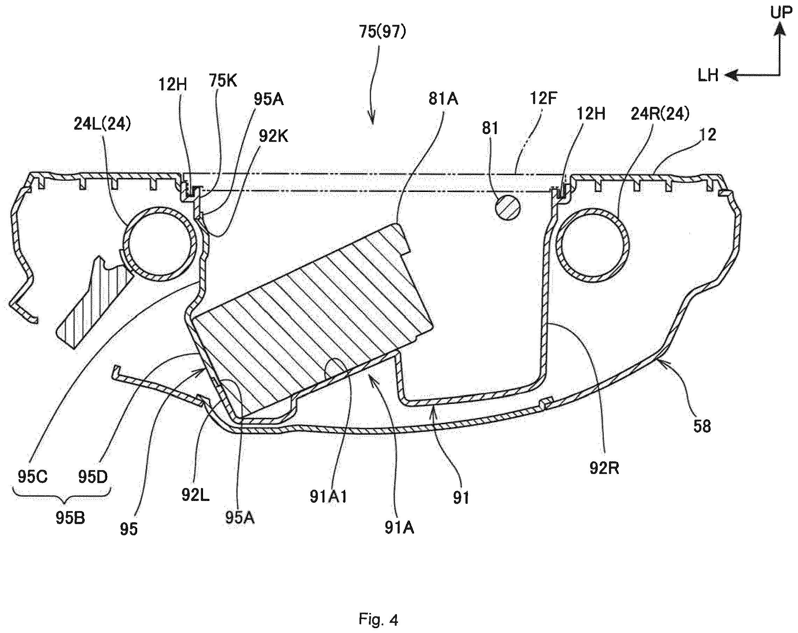

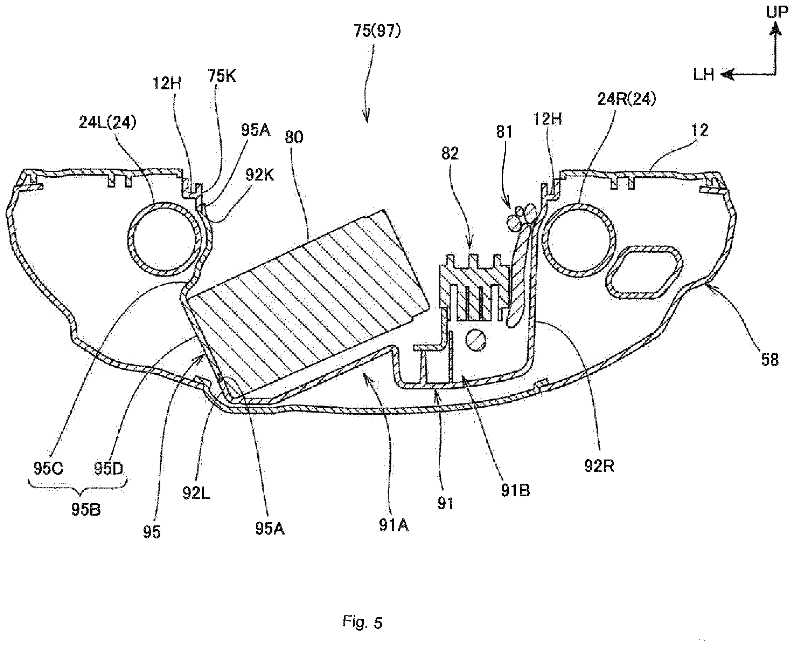

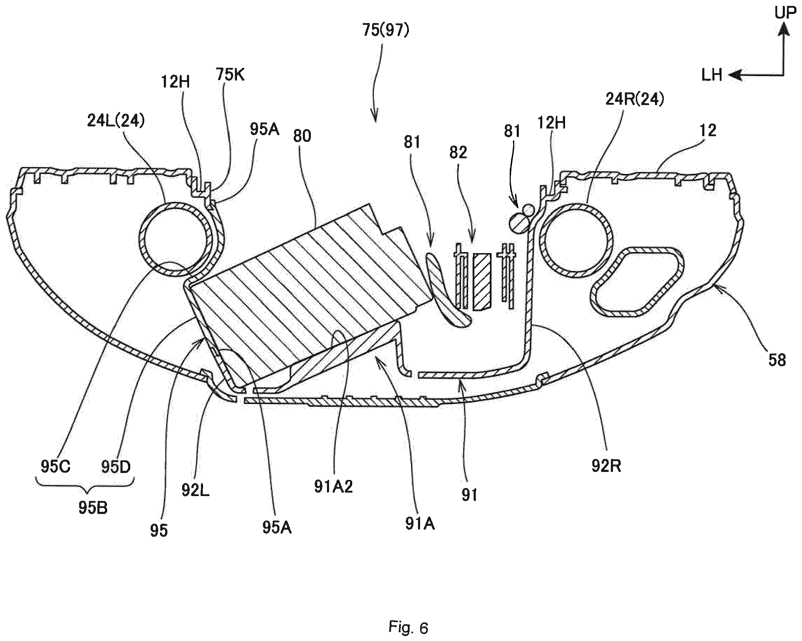

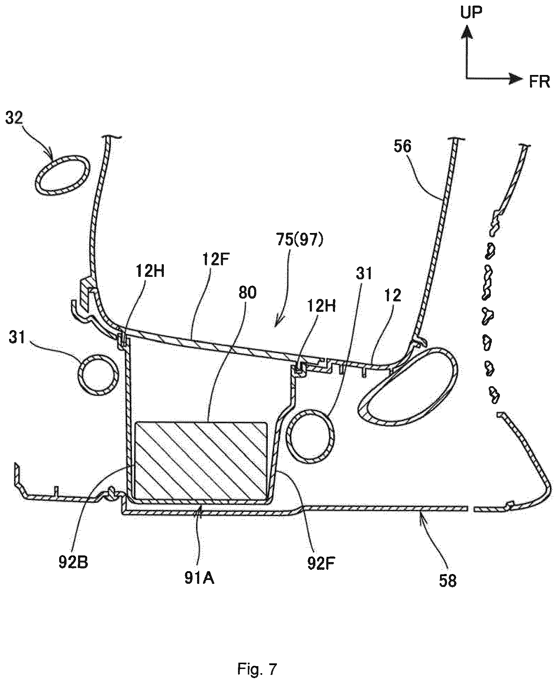

Fig. 3 is a top view illustrating the second storage box 75 together with peripheral configurations, Fig. 4 is a cross-sectional view taken along the line IV-IV in Fig. 3, Fig. 5 is a cross-sectional view taken along the line V-V in Fig. 3, Fig. 6 is a cross-sectional view taken along the line VI-VI in Fig. 3, and Fig. 7 is a cross-sectional view taken along the line VII-VII in Fig. 3.

As illustrated in Fig. 3 and so forth, the second storage box 75 has a bottomed box-shape depressed downward from the floor step 12, and includes an upper opening 75K that opens upward. The upper opening 75K is provided in the floor step 12 at a central position of the vehicle width, and is formed into an opening opened upward between the pair of left and right lower frames 24, 24 and between the pair of front and rear cross frames 31, 31 in top view of the vehicle.

Hereinafter, the lower frame 24 on the left side is expressed as a lower frame 24L, and the lower frame 24 on the right side is expressed as a lower frame 24R for the sake of convenience of description.

The upper opening 75K is closed by a first lid portion 12F (see Fig. 4 and Fig. 7) that is placed on the floor step 12. The floor step 12 is provided with a depression 12H depressed downward along an outer periphery of the upper opening 75K in an endless fashion, and an outer peripheral edge of the first lid portion 12F fits into the depression 12H to close the upper opening 75K.

The first lid portion 12F closes the upper opening 75K so that rain water and the like is restricted from entering the second storage box 75. Removing the first lid portion 12F allows the user (for example, passenger) to access the interior of the second storage box 75 easily from above.

As illustrated in Fig. 3, the second storage box 75 includes therein the parallelepiped battery 80 that supplies power to each part of the motorcycle 10, wiring 81 that is connected to a pair of terminals 80A, 80B of the battery 80, and an electric box 82 in which fuses, relays, and the like which are attached to the wiring 81 are disposed.

As illustrated in Fig. 4 and Fig. 5, placing the battery 80 on a mounting seat 91A provided in a bottom plate portion 91 of the second storage box 75 obliquely arranges the battery 80 in back view of the vehicle body and supports the same so as to be biased to the left lower frame 24L. The mounting seat 91A will be described now.

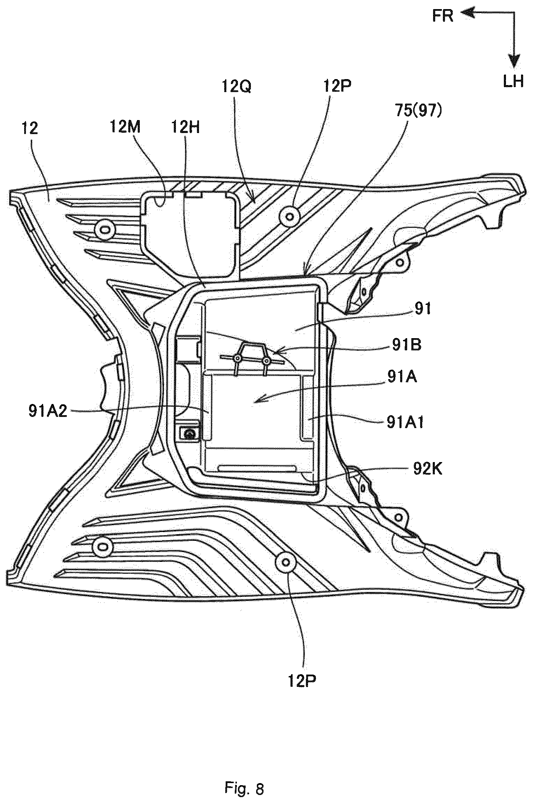

Fig. 8 is a top view of the second storage box 75 illustrated with peripheral configurations with the electric components 80 to 82 such as the battery 80 removed.

As illustrated in Fig. 8, the mounting seat 91A is integrally provided with placing portions 91A1, 91A2 that protrude upward at a distance in the fore-and-aft direction, and allows the battery 80 to be placed thereon. Upper surfaces of the placing portions 91A1, 91A2 are inclined obliquely downward toward the left lower frame 24L as illustrated in Fig. 4 and Fig. 6.

Accordingly, placing the battery 80 on the upper surfaces of the pair of placing portions 91A1, 91A2 supports the battery 80 in a posture inclined obliquely downward toward the left lower frame 24L. In this case, the battery 80 is supported in such a posture that the pair of terminals 80A, 80B is at relatively higher positions, and thus may be arranged with the terminals 80A, 80B being at positions away from the ground.

In Fig. 3, reference sign 80T denotes a battery holding member that prevents the battery 80 from dropping out. In Fig. 8, reference signs 12P denote hole portions which allow passage of fastening members to be fastened to mounting seats 24a, 24a (Fig. 2) provided on the lower frames 24L, 24R. Reference signs 12Q denote rib-shaped convexities provided on an upper surface of the floor step 12. Reference sign 12M denotes an opening window for maintenance. The opening window 12M is closed with an adequate member, which is not illustrated.

As illustrated in Fig. 8, the bottom plate portion 91 of the second storage box 75 is integrally provided with an electric component mounting portion 91B in an area opposite to (right side of) the battery 80 with respect to the mounting seat 91A. The electric component mounting portion 91B protrudes upward from the bottom plate portion 91 to support the electric box 82 in a floating fashion as illustrated in Fig. 5. Accordingly, the electric box 82 is supported at a high position away from the ground.

As illustrated in Fig. 4 to Fig. 7, the floor step 12 includes left and right side walls 92L, 92R and front and rear walls (front wall 92F and rear wall 92B) extending downward from a peripheral edge of the upper opening 75K. Lower edges of these four wall portions 92L, 92R, 92F, 92B continue to a peripheral edge of the bottom plate portion 91. Among these four wall portions 92L, 92R, 92F, 92B, the wall portion 92L located on a side of one of the lower frames 24L is provided with an opening 92K opening in the vehicle width direction, and the opening 92K is closed with a detachable second lid portion 95.

The second storage box 75 is composed of two parts; a second storage box body 97 including the four wall portions 92L, 92R, 92F, 92B and the bottom plate portion 91, and the second lid portion 95 that demountably covers the opening 92K provided on one of the left and right (left in this configuration) side walls.

In this configuration, the second storage box body 97 and the floor step 12 are manufactured as an integral mold which is integrally molded by using a resin material or the like. Subsequently, the second lid portion 95 will be described.

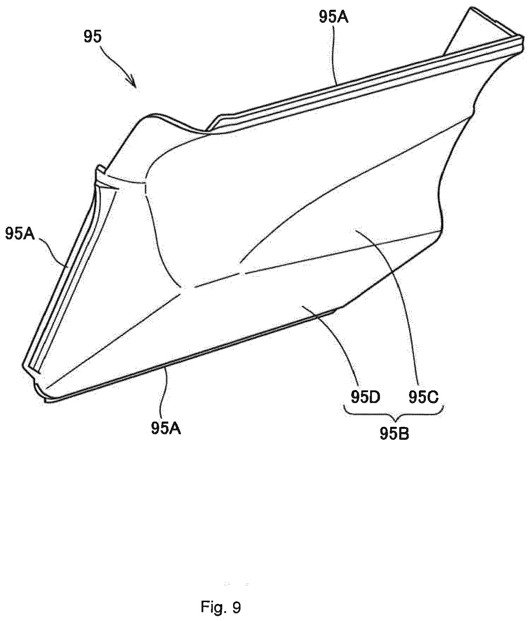

Fig. 9 is a perspective view of the second lid portion 95.

The second lid portion 95 integrally includes a plurality of abutting ribs 95A that come into abutment with an opening 97K (Fig. 4, Fig. 8, etc.) of the second storage box body 97 from inside the second storage box body 97 and a swelled-plate-shaped swelled body 95B that swells outward from the abutting rib 95A in the vehicle width direction (which corresponds to the left lower frame 24L side illustrated in Fig. 4 etc.).

The abutting rib 95A functions as a retaining member that prevents the second lid portion 95 from coming apart from the opening 97K when the second lid portion 95 is put into the opening 97K from inside the second storage box body 97.

The swelled body 95B is formed into a swelled shape swelling toward an area under the left lower frame 24L as illustrated in Fig. 4 to Fig. 6. More specifically, the swelled body 95B is formed into a shape integrally provided with a depressed shaped portion 95C that is depressed inward of the second storage box 75 along the left lower frame 24L and a protruded shaped portion 95D continuing from a lower edge of the depressed shaped portion 95C and protruding outward in the vehicle width direction toward the area under the left lower frame 24L.

Accordingly, when the second lid portion 95 is fitted in the opening 97K of the second storage box body 97, the depressed shaped portion 95C bypasses the left lower frame 24L and the protruded shaped portion 95D swells into a space under the left lower frame 24L, so that the second lid portion 95 overlaps with the left lower frame 24L in top view of the vehicle.

In this manner, a storage space of the second storage box 75 may be broaden to the space under the left lower frame 24L by the second lid portion 95. As illustrated in Fig. 4 etc., the second lid portion 95 also overlaps with the floor step 12 in top view of the vehicle body, and thus the second storage box 75 is a member that overlaps with the floor step 12 in top view of the vehicle body.

The swelled body 95B of the second lid portion 95 is formed to have a surface shape that comes into abutment with a surface (which corresponds to the bottom plate portion 91) on the left lower frame 24L side (outside in the vehicle width direction) when the parallelepiped battery 80 is arranged in an inclined posture with a portion on the left lower frame 24L side (outside in the vehicle width direction) at a relatively lower position and a portion on the opposite side (inside in the width direction) at a relatively higher position as illustrated in Fig. 4 to Fig. 6.

Accordingly, the battery 80 may be arranged in the space below the left lower frame 24L, and a storage space for the battery 80 may be broadened to an area overlapped with the left lower frame 24L in top view of the vehicle. Therefore, the battery 80 is arranged at a position overlapped with the lower frame 24L in top view of the vehicle.

As illustrated in the same Fig. 4 etc., the second storage box 75 stores the battery 80 so as to extend over a portion overlapping with the lower frame 24L in top view of the vehicle and a portion not overlapping with the lower frame 24L in top view of the vehicle, and thus a battery having a larger size may be accommodated compared with a case where the battery of this type is arranged so-called vertically or horizontally.

In addition, the battery 80 is obliquely arranged in back view of the vehicle body. From this reason as well, the storage space of the second storage box 75 may be efficiently used to arrange a large-sized battery.

As illustrated in Fig. 4 and Fig. 6, the battery 80 is guided by the placing portions 91A1, 91A2 of the mounting seat 91A obliquely downward toward a position to hold the second lid portion 95 from inside. Accordingly, the own weight of the battery 80 may be used to hold the second lid portion 95 in a closed state.

An area of the bottom surface of the battery 80 located between the lower frames 24L, 24R is supported in abutment with the left side wall 92L of the second storage box body 97 as illustrated in Fig. 4 to Fig. 6. In other words, an area of the battery 80 overlapping with the lower frame 24L in top view of the vehicle comes into abutment with the second lid portion 95, and a portion not overlapping with the lower frame 24L may be supported by the second storage box body 97. Although illustration is omitted, the second lid portion 95 is hooked on the left side wall 92L so as to be detachable in the opening 92K.

Subsequently, each portion of the second storage box body 97 will be described.

As illustrated in Fig. 4 to Fig. 6, the left side wall 92L that has the opening 92K and the right side wall 92R that does not have an opening are formed into walls extending downward respectively from left and right edge portions of the upper opening 75K and passing through between the pair of lower frames 24L, 24R.

Accordingly, the left and right side walls 92L, 92R are arranged in an inner area between the lower frames 24L, 24R in top view of the vehicle, and do not overlap with the lower frame 24L in top view of the vehicle. In addition, the opening 92K formed in the left side wall 92L is arranged in the inner area between the lower frames 24L, 24R in top view of the vehicle, and do not overlap with the lower frame 24L in top view of the vehicle.

As illustrated in Fig. 7, the front wall 92F and the rear wall 92B are formed into walls extending respectively downward from front and rear edge portions of the upper opening 75K, and passing between the pair of cross frames 31, 31. The front wall 92F and the rear wall 92B are walls arranged in an inner area between the cross frames 31, 31 in top view of the vehicle at least in an area not higher than the cross frames 31, 31 (including an area at the same height as the cross frames 31, 31), and do not overlap with the cross frames 31, 31 in top view of the vehicle.

However, the front wall 92F extends toward the front to a position overlapping with the cross frames 31 in top view of the vehicle in an area higher than the front cross frames 31 to broaden an upper space of the second storage box body 97.

The bottom plate portion 91 is also provided between the lower frames 24L, 24R and in the inner area between the cross frames 31, 31 in top view of the vehicle. In this manner, the second storage box body 97 is provided between the lower frames 24L, 24R and inside the cross frames 31, 31 in top view of the vehicle. Accordingly, the second storage box body 97 may be put in and taken out from between the lower frames 24L, 24R and between the cross frames 31, 31 easily.

Even when the second storage box body 97 and the floor step 12 are molded integrally into an integral molding, the second storage box body 97 is accommodated within an area in the upper opening 75K of the floor step 12 in top view of the vehicle body. Therefore, a direction of opening of the mold at the time of molding (a demolding direction) may be set to one direction, so that the integral molding is achieved at low costs without using a slide die.

When an attempt is made to mold the second lid portion 95, the second storage box body 97, and the floor step 12 integrally, the portion corresponding to the second lid portion 95 needs to be manufactured by using a slide die, which may cause an increase in manufacturing cost.

If the case of molding the second storage box body 97 as an independent part and the case of molding the second storage box body 97 and the second lid portion 95 integrally are compared, the former (the case of molding the second storage box body 97 as the independent part) is achieved without using the slide die, and is advantageous in reduction in manufacturing costs.

As described thus far, this embodiment includes the lower frames 24L, 24R arranged between the steering handle 27 and the passenger seat 11 and passing under the floor step 12 that allows the passenger to place his or her feet, and the second storage box 75 arranged between the lower frames 24L, 24R, and the second storage box 75 and the battery 80 as the object to be stored in the second storage box 75 overlap with the lower frame 24L in top view of the vehicle. Therefore, a space overlapping with the lower frame 24L in top view of the vehicle can be effectively used as the storage space, and the storable amount may be effectively increased even in a limited space in the vehicle.

Part of the second storage box 75 swells toward an area under the lower frame 24L and overlaps with the lower frame 24L in top view of the vehicle, and the second storage box 75 stores the battery 80 that extends across the part of the storage box 75 and a remaining part as the object to be stored. Therefore, a large-sized battery 80 may be accommodated.

In addition, the second storage box 75 supports the battery 80 in a posture inclined upward as it goes away from the lower frame 24L with which the battery 80 overlaps in top view of the vehicle. From this reason as well, the large-sized battery 80 may be stored.

The opening 92K provided on the side wall 92L of the second storage box 75 and the second lid portion 95 that is detachable and covers the opening 92K are provided, and the opening 92K is provided between the lower frames 24L, 24R in top view of the vehicle, and the second lid portion 95 has a shape that swells out from the opening 92K and overlaps with the lower frame 24L in top view of the vehicle. Therefore, the second storage box 75 that overlaps with the lower frame 24L in top view of the vehicle may be manufactured with lower costs without using a slide die. Removing the second lid portion 95 makes the second storage box 75 to have a size that can be accommodated within the space interposed between the lower frames 24L, 24R and allows the same to be put in and easily taken out from between the lower frames 24L, 24R, so that the mounting and demounting operation is facilitated.

The second lid portion 95 is configured to close the opening 92K from inside the second storage box 75. Therefore, the mounting and demounting operation of the second lid portion 95 is achieved more easily than the case of closing the opening 92K from outside the second storage box 75.

The second storage box 75 includes the mounting seat 91A that functions as an inclined portion inclining obliquely downward toward the lower frame 24L that overlaps with the second lid portion 95 in top view of the vehicle, and the mounting seat 91A is a base that guides the battery 80 placed on the mounting seat 91A to a position of holding the second lid portion 95. Therefore, the second lid portion 95 may be held to a position to close the opening 92K by using the battery 80.

The parallelepiped battery 80 is placed on the mounting seat 91A, and the mounting seat 91A obliquely supports the battery 80 in such a posture that the terminals 80A, 80B of the battery 80 are at relatively higher positions. Therefore, the parallelepiped large-sized battery 80 may be accommodated and the terminals 80A, 80B of the battery 80 may be supported at a higher position away from the ground.

The second storage box 75 supports the battery 80 at a position biased toward one of the lower frames 24L, which overlaps with the second lid portion 95 in top view of the vehicle, and with respect to the battery 80, electric components (the wiring 81, the electric box 82) connected to the battery 80 are stored on an opposite side to the one of the lower frames 24L. Therefore, the large-sized battery 80 and the electric components 81, 82 connected to the battery 80 may be efficiently stored.

The floor step 12 and the second storage box body 97 (the second storage box 75 except for the second lid portion 95) are integrally molded, the second storage box 75 has a box shape depressed downward from the floor step 12 and overlaps with the upper opening 75K that opens the second storage box 75 upward when the second lid portion 95 is demounted in top view of the vehicle, and the second lid portion 95 overlaps with the floor step 12 in top view of the vehicle. Therefore, the floor step 12 and the second storage box body 97 may be integrally molded without using a slide die.

The above-described embodiment is only one exemplary embodiment of the present invention, and modifications and applications are possible as desired without departing from the scope of the present invention.

For example, the case of arranging the battery 80 in the second storage box 75 has been described in the above-described embodiment. However, the object to be stored may be changed as needed.

In the above-described embodiment, the case where the present invention is applied to the motorcycle 10 illustrated in Fig. 1 has been described. However, the invention is not limited thereto, and may be applied to various saddle-type vehicles such as three-wheel vehicles and four-wheel vehicles.

An explanation of the reference signs used in the drawings is provided below.

10 saddle-type vehicle
11 seat
12 floor step
21 vehicle body frame
24, 24L, 24R lower frame
27 steering handle
71 first storage box
75 second storage box
75K upper opening
80 battery (object to be stored)
80A, 80B terminal
81 wiring (object to be stored)
82 electric box (object to be stored)
91A mounting seat (inclined portion)
92K opening
92L, 92R side wall
92F front wall
92B rear wall
95 second lid portion
97 second storage box body

## Claims

1. A saddle-type vehicle comprising a floor step (12) that is arranged between a steering handle (27) and a passenger seat (11) and allows a passenger to place his or her feet; a pair of lower frames (24L, 24R) that constitute part of a vehicle body frame (21) and pass under the floor step (12); and a storage box (75) arranged between the lower frames (24L, 24R), wherein
the storage box (75) and an object to be stored (80) to be stored in the storage box (75) overlap with the lower frame (24L) in top view of the vehicle,
**characterised in that** the vehicle further comprises:
an opening (92K) provided on a side wall (95L) of the storage box (75); and a lid portion (95) that is detachable and covers the opening (92K); and **in that**
the opening (92K) is provided between the lower frames (24L, 24R) in the top view of the vehicle, and the lid portion (95) has a shape that swells out from the opening (92K) and overlaps with the lower frame (24L) in the top view of the vehicle.

2. A saddle-type vehicle according to Claim 1, wherein
part of the storage box (75) swells toward an area under the lower frame (24L) and overlaps with the lower frame (24L) in the top view of the vehicle, and
the storage box (75) stores an object to be stored that extends across the part of the storage box (75) and a remaining part thereof as the object to be stored (80).

3. A saddle-type vehicle according to Claim 1 or 2, wherein
the lid portion (95) closes the opening (92K) from inside the storage box (75).

4. A saddle-type vehicle according to any one of Claims 1 to 3, wherein
the storage box (75) includes an inclined portion (91A) that inclines obliquely downward toward the lower frame (24L) that overlaps with the lid portion (95) in the top view of the vehicle, and
the inclined portion (91A) is a base that guides the object to be stored (80) placed on the inclined portion (91A) to a position of holding the lid portion (95).

5. A saddle-type vehicle according to any one of Claims 1 to 4, wherein
a parallelepiped battery is placed on the inclined portion (91A) as the object to be stored (80), and
the inclined portion (91A) obliquely supports the battery (80) in such a posture that terminals (80A, 80B) of the battery (80) are at relatively higher positions.

6. A saddle-type vehicle according to any one of Claims 1 to 5, wherein
the storage box (75) supports the battery (80) at a position biased toward one of the lower frames (24L), which overlaps with the lid portion (95) in the top view of the vehicle, and
with respect to the battery (80), electric components (81, 82) connected to the battery (80) are stored on an opposite side to the one of the lower frames (24L).

7. A saddle-type vehicle according to any one of Claims 1 to 6, wherein
the floor step (12) and the storage box (75) except for the lid portion (95) are integrally molded,
the storage box (75) has a box shape depressed downward from the floor step (12) and overlaps with an upper opening (75K) that opens the storage box (75) upward when the lid portion (95) is demounted in the top view of the vehicle, and
the lid portion (95) overlaps with the floor step (12) in the top view of the vehicle.

## Patentansprüche

1. Fahrzeug vom Satteltyp, umfassend eine Sohlenstufe (12), die zwischen einem Lenkgriff (27) und einem Passagiersitz (11) angeordnet ist und es einem Passagier gestattet, seine oder ihre Füße zu platzieren; ein Paar untere Rahmen (24L, 24R), die einen Teil eines Karosserierahmens (21) darstellen und unter der Sohlenstufe (12) verlaufen; und einen Aufbewahrungskasten (75), der zwischen den unteren Rahmen (24L, 24R) angeordnet ist, wobei
der Aufbewahrungskasten (75) und ein aufzubewahrendes Objekt (80), das im Aufbewahrungskasten (75) aufzubewahren ist, sich mit dem unteren Rahmen (24L) in der Draufsicht des Fahrzeugs überlappen,
**dadurch gekennzeichnet, dass** das Fahrzeug weiter umfasst:
eine Öffnung (92K), die an einer Seitenwand (95L) des Aufbewahrungskastens (75) vorgesehen ist; und einen Deckelteil (95), der abnehmbar ist und die Öffnung (92K) abdeckt; und dadurch, dass
die Öffnung (92K) zwischen den unteren Rahmen (24L, 24R) in der Draufsicht des Fahrzeugs vorgesehen ist und der Deckelteil (95) eine Form hat, die sich aus der Öffnung (92K) ausdehnt und sich mit dem unteren Rahmen (24L) in der Draufsicht des Fahrzeugs überlappt.

2. Fahrzeug vom Satteltyp nach Anspruch 1, wobei
sich ein Teil des Aufbewahrungskastens (75) zu einem Bereich unter dem unteren Rahmen (24L) hin ausdehnt und sich mit dem unteren Rahmen (24L) in der Draufsicht des Fahrzeugs überlappt, und
der Aufbewahrungskasten (75) ein aufzubewahrendes Objekt aufbewahrt, das sich über den Teil des Aufbewahrungskastens (75) und einen übrigen Teil davon als das aufzubewahrende Objekt (80) erstreckt.

3. Fahrzeug vom Satteltyp nach Anspruch 1 oder 2, wobei
der Deckelteil (95) die Öffnung (92K) von innerhalb des Aufbewahrungskastens (75) verschließt.

4. Fahrzeug vom Satteltyp nach einem der Ansprüche 1 bis 3, wobei
der Aufbewahrungskasten (75) ein geneigtes Teil (91A) aufweist, das sich schräg nach unten zum unteren Rahmen (24L) hin neigt, der sich mit dem Deckelteil (95) in der Draufsicht des Fahrzeugs überlappt, und
das geneigte Teil (91A) eine Basis ist, die das aufzubewahrende Objekt (80), das auf dem geneigten Teil (91A) platziert ist, an eine Position zum Halten des Deckelteils (95) führt.

5. Fahrzeug vom Satteltyp nach einem der Ansprüche 1 bis 4, wobei
eine Parallelepiped-Batterie auf dem geneigten Teil (91A) als das aufzubewahrende Objekt (80) platziert ist, und
das geneigte Teil (91A) die Batterie (80) schräg in einer solchen Stellung trägt, dass sich die Anschlussklemmen (80A, 80B) der Batterie (80) an relativ höheren Positionen befinden.

6. Fahrzeug vom Satteltyp nach einem der Ansprüche 1 bis 5, wobei
der Aufbewahrungskasten (75) die Batterie (80) an einer Position trägt, die zu einem der unteren Rahmen (24L) hin geneigt ist, der sich mit dem Deckelteil (95) in der Draufsicht des Fahrzeugs überlappt, und
in Bezug auf die Batterie (80), mit der Batterie (80) verbundene elektrische Komponenten (81, 82) an einer entgegengesetzten Seite zum einen der unteren Rahmen (24L) aufbewahrt werden.

7. Fahrzeug vom Satteltyp nach einem der Ansprüche 1 bis 6, wobei
die Sohlenstufe (12) und der Aufbewahrungskasten (75), mit Ausnahme des Deckelteils (95), integral geformt sind,
der Aufbewahrungskasten (75) eine von der Sohlenstufe (12) nach unten zurückgesetzte Kastenform hat und sich mit einer oberen Öffnung (75K) überlappt, die den Aufbewahrungskasten (75) nach oben öffnet, wenn der Deckelteil (95) abgenommen ist, in der Draufsicht des Fahrzeugs, und
der Deckelteil (95) sich mit der Sohlenstufe (12) in der Draufschicht des Fahrzeugs überlappt.

## Revendications

1. Véhicule de type à enfourcher comprenant un marchepied (12) qui est agencé entre un guidon (27) et un siège de passager (11) et qui permet à un passager de placer son ou ses pieds ; une paire de cadres inférieurs (24L, 24R) faisant partie d'un cadre de carrosserie de véhicule (21) et passant sous le marchepied (12) ; et une boîte de rangement (75) agencée entre les cadres inférieurs (24L, 24R), dans lequel
la boîte de rangement (75) et un objet à ranger (80) qui doit être rangé dans la boîte de rangement (75) chevauchent le cadre inférieur (24L) dans une vue du haut du véhicule,
**caractérisé en ce que** le véhicule comprend en outre :
une ouverture (92K) prévue sur une paroi latérale (95L) de la boîte de rangement (75) ; et une portion de couvercle (95) qui est détachable et qui recouvre l'ouverture (92K) ; et **en ce que**
l'ouverture (92K) est prévue entre les cadres inférieurs (24L, 24R) dans la vue du haut du véhicule, et la portion de couvercle (95) présente une forme qui gonfle vers l'extérieur depuis l'ouverture (92K) et qui chevauche le cadre inférieur (24L) dans la vue du haut du véhicule.

2. Véhicule de type à enfourcher selon la revendication 1, dans lequel
une partie de la boîte de rangement (75) gonfle vers une zone sous le cadre inférieur (24L) et chevauche le cadre inférieur (24L) dans la vue du haut du véhicule, et
la boîte de rangement (75) range un objet à ranger qui s'étend à travers la partie de la boîte de rangement (75) et une partie restante de celui-ci en tant que l'objet à ranger (80).

3. Véhicule de type à enfourcher selon la revendication 1 ou 2, dans lequel
la portion de couvercle (95) ferme l'ouverture (92K) depuis l'intérieur de la boîte de rangement (75).

4. Véhicule de type à enfourcher selon l'une quelconque des revendications 1 à 3, dans lequel
la boîte de rangement (75) comprend une portion inclinée (91A) qui s'incline obliquement vers le bas dans le sens du cadre inférieur (24L) qui chevauche la portion de couvercle (95) dans la vue du haut du véhicule, et
la portion inclinée (91A) est une base qui guide l'objet à ranger (80) placé sur la portion inclinée (91A) jusqu'à une position de maintien de la portion de couvercle (95).

5. Véhicule de type à enfourcher selon l'une quelconque des revendications 1 à 4, dans lequel
une batterie parallélépipédique est placée sur la portion inclinée (91A) en tant que l'objet à ranger (80), et
la portion inclinée (91A) supporte obliquement la batterie (80) de sorte que des bornes (80A, 80B) de la batterie (80) soient dans des positions relativement plus hautes.

6. Véhicule de type à enfourcher selon l'une quelconque des revendications 1 à 5, dans lequel
la boîte de rangement (75) supporte la batterie (80) dans une position polarisée vers l'un des cadres inférieurs (24L), qui chevauche la portion de couvercle (95) dans la vue du haut du véhicule, et
par rapport à la batterie (80), des composants électriques (81, 82) raccordés à la batterie (80) sont rangés sur un côté opposé à l'un des cadres inférieurs (24L).

7. Véhicule de type à enfourcher selon l'une quelconque des revendications 1 à 6, dans lequel
le marchepied (12) et la boîte de rangement (75) à l'exception de la portion de couvercle (95) sont moulés d'un seul tenant,
la boîte de rangement (75) présente une forme de boîte enfoncée vers le bas depuis le marchepied (12) et chevauche une ouverture supérieure (75K) qui ouvre la boîte de rangement (75) vers le haut lorsque la portion de couvercle (95) est démontée dans la vue du haut du véhicule, et
la portion de couvercle (95) chevauche le marchepied (12) dans la vue du haut du véhicule.
